# EUROPEAN PATENT SPECIFICATION

(11) **EP 3 985 685 B1**
(45) Date of publication and mention of the grant of the patent: **26.02.2025**
(21) Application number: 20912993.1
(22) Date of filing: 07.01.2020
(51) Int. Cl.: G21C 15/18

(54) **SAFETY SYSTEM FOR DEALING WITH SEVERE ACCIDENT OF NUCLEAR POWER PLANT AND CONTROL METHOD THEREFOR**
SICHERHEITSSYSTEM ZUR BEHANDLUNG SCHWERER STÖRFÄLLE EINES KERNKRAFTWERKS UND STEUERUNGSVERFAHREN DAFÜR
SYSTÈME DE SÉCURITÉ POUR TRAITER UN ACCIDENT GRAVE D'UNE CENTRALE NUCLÉAIRE ET SON PROCÉDÉ DE COMMANDE

(43) Date of publication of application: 20.04.2022
(73) Proprietor: China Nuclear Power Technology Research Institute Co., Ltd, Shenzhen, Guangdong 518031 (CN); China General Nuclear Power Corporation, Shenzhen, Guangdong 518028 (CN); CGN Power Co., Ltd, Shenzhen, Guangdong 518028 (CN)
(72) Inventor: ZHAN, Dekui, Futian District Shenzhen, Guangdong 518031 (CN); ZHAO, Xinhai, Futian District Shenzhen, Guangdong 518031 (CN); XIA, Shaoxiong, Futian District Shenzhen, Guangdong 518031 (CN); CHEN, Peng, Futian District Shenzhen, Guangdong 518031 (CN); FU, Hui, Futian District Shenzhen, Guangdong 518031 (CN); WU, Zijie, Futian District Shenzhen, Guangdong 518031 (CN)
(74) Representative: Westphal, Mussgnug & Partner, Patentanwälte mbB
(86) International application number: PCT/CN2020/070695
(87) International publication number: WO 2021/138806

(56) References cited:
- EP-A1- 0 418 701
- WO-A1-2017/045159
- CN-A- 102 867 549
- CN-A- 103 578 581
- CN-A- 103 971 764
- CN-A- 104 112 482
- CN-A- 105 280 249
- CN-A- 105 405 479
- CN-A- 109 243 636
- CN-U- 209 045 171
- US-A- 5 180 543
- US-A- 5 519 743
- US-A1- 2014 219 409

## Description

### Technical Field

The present disclosure relates to the technical field of nuclear power, and more particularly, to a safety system for dealing with a severe accident of a nuclear power plant and a control method therefor.

### Background Art

When a severe accident occurs in a nuclear power plant, a core is exposed and finally melt due to a coolant loss of a primary loop system of the nuclear power plant, and the core corium will eventually collapse into a lower head of RPV (reactor pressure vessel). If the core corium cannot be cooled in time, the corium will eventually melt through a wall of the lower head of the RPV because of the core decay heat, thus the core corium falls in a pit and may possibly melt through a basemat of a containment, resulting in a large leakage of radioactive substance in the end.

A reactor pit flooding system is generally adopted in the prior art to realize a pit water injection in domestic and foreign pressurized water reactor nuclear power plant, and a forced or natural circulation cooling is generated on an outer wall surface of a reactor pressure vessel to take away decay heat, so that the lower head is prevented from being melted through. However, under the severe accident conditions initiating in a large or medium break event, a coolant loss speed of the reactor pressure vessel is fast due to a boundary break area of the primary loop system is large. Due to factors such as an uncertainty of a core melt process and a delayed operation time of severe accident mitigation systems, the possibility of the core corium melting through the RPV still exists.

Two or more accumulators are utilized in current pressurized water reactor nuclear power plant. Each accumulator is divided into a gas space (about 25m³) and a boric acid water space (about 35m³). When a pressure of the primary loop system of the nuclear power plant is less than a specific value, generally 4.0-5.0MPa, an electric valve is automatically started, and the boric acid water is quickly injected into the reactor pressure vessel (RPV) through a cold pipe at a time. However on other conditions, there is no passive injection water available in the accumulator, resulting in an occurrence of the accident of the core being melted.

Examples of safety injection systems for nuclear power plants are disclosed in publications US 2014/219409 A1, US 5 180 543 A, EP 0 418 701 A1, CN 105 405 479 A, WO 2017/045159 A1 and CN 104 112 482 A.

### Summary

A technical problem to be solved in the present disclosure is to provide a safety system for dealing with a severe accident of a nuclear power plant and a control method therefor to improve the safety of the nuclear reactor.

A technical solution adopted by the present disclosure to solve the technical **problem** is to provide a safety system for dealing with a severe accident of a nuclear power plant, wherein the safety system includes at least one in-reactor water injection system for injecting water into a reactor pressure vessel;

each in-reactor water injection system includes a multi-stage accumulator, and a first water injection pipeline connected to a cold pipe of a primary loop system; an interior space of the multi-stage accumulator includes a gas-phase space, a first-stage water injection space, and a second-stage water injection space distributed from top to bottom in sequence; the multi-stage accumulator is provided with a first flow pipeline and a second flow pipeline having a pipe diameter less than that of the first flow pipeline, the first flow pipeline communicates the first-stage water injection space with the first water injection pipeline, and the second flow pipeline communicates the second-stage water injection space with the first water injection pipeline.

The safety system for dealing with the severe accident of the nuclear power plant further includes at least one outer-reactor cooling water injection system for injecting water into a pit; and
each outer-reactor cooling water injection system includes a high-level water injection tank disposed above the reactor pressure vessel, and a second water injection pipeline connected between the high-level water injection tank and the pit.

Preferably, the first flow pipeline has a pipe diameter of ≥ 100mm; the second flow pipeline has a pipe diameter of 40mm-80mm, and is configured to supply water at a water injection flow rate of 20m³/h-60m³/h.

Preferably, the gas-phase space is configured to have a pressure of 4.0MPa-5.0MPa;
a corresponding pressure of the primary loop system of the nuclear power plant when the first-stage water injection space starts water injection is 4.0MPa-5.0MPa; and
the corresponding pressure of the primary loop system of the nuclear power plant when the second-stage water injection space starts water injection is 0.4MPa-1.0MPa.

Preferably, each in-reactor water injection system further includes a first check valve disposed on the first water injection pipeline, a first power valve disposed on the first flow pipeline, and a second power valve disposed on the second flow pipeline.

Preferably, each in-reactor water injection system further includes a liquid level gauge disposed on the multi-stage accumulator corresponding to the first-stage water injection space; and
when a liquid level in the multi-stage accumulator drops to a preset value, the safety system is configured to trigger a signal to close the first power valve, to close the first power valve, and to disconnect the communication between the first flow pipeline and the first-stage water injection space; a position where the preset value is located is higher than a connection position of the first flow pipeline on the multi-stage accumulator.

Preferably, each in-reactor water injection system further includes a pressure gauge and a high-pressure gas source connecting with the gas-phase space; a third power valve is provided on a connection pipeline connected between the high-pressure gas source and the gas-phase space; when a gas pressure of the multi-stage accumulator is less than 2.0MPa, the safety system is configured to trigger a signal to open the third power valve, to open the third power valve, and the high-pressure gas source is configured to supply gas into the multi-stage accumulator.

Preferably, the interior space of the multi-stage accumulator further includes at least one third-stage water injection space disposed below the second-stage water injection space; the multi-stage accumulator is further provided with at least one third flow pipeline, and each third flow pipeline is communicated with each third-stage water injection space and has a pipe diameter less than that of the first flow pipeline.

Preferably, each outer-reactor cooling water injection system further includes a third flow pipeline connected between the high-level water injection tank and the second water injection pipeline; a pipe diameter of the third flow pipeline is less than that of the second water injection pipeline, and a connection position of the third flow pipeline on the high-level water injection tank is lower than that of the second water injection pipeline on the high-level water injection tank.

Preferably, each outer-reactor cooling water injection system further includes a fourth power valve and a second check valve disposed sequentially on the second water injection pipeline in a direction from the high-level water injection tank to the pit, and a fifth power valve disposed on the third flow pipeline; and
a connection position of the third flow pipeline on the second water injection pipeline is located between the fourth power valve and the second check valve.

The present disclosure further provides a control method for dealing with a severe accident of a nuclear power plant, wherein the control method adopts the safety system for dealing with the severe accident of the nuclear power plant in any one of the above; the control method for dealing with the severe accident of the nuclear power plant includes:
before the reactor being under a severe accident condition, when a pressure of the primary loop system of the reactor being less than a first preset value, the at least one in-reactor water injection system quickly injecting water into the reactor pressure vessel through the first flow pipeline, the first water injection pipeline and the cold pipe, to flood the core; when the pressure of the primary loop system being less than a second preset value, the at least one in-reactor water injection system injecting water into the reactor pressure vessel through the second flow pipeline, the first water injection pipeline and the cold pipe, to re-flood the core; the first preset value being larger than the second preset value.

The control method further includes: when the reactor being under a severe accident condition, at least one outer-reactor cooling water injection system injecting water into a pit through a second water injection pipeline.

The present disclosure has the following beneficial effects: both in-reactor and outer-reactor cooling may be conducted by the in-reactor water injection system in conjunction with the outer-reactor cooling water injection system, to effectively prevent a large scale of core melt, and to reduce the risk of core corium melting through the RPV when a severe accident occurs. Wherein, the in-reactor water injection system injects water in a manner of large flow rate combined with small flow rate, thereby the time of in-reactor water injection is prolonged, the core in a flooding state for a long time is ensured, the possibility of core degradation or being melted caused by a coolant loss when an accident occurs is significantly reduced, the process of the severe accident is mitigated, and maintaining the integrity of the RPV is achieved when a severe accident occurs.

### Brief Description of the Drawings

The present disclosure will now be further described with reference to the accompanying drawings and embodiments, and in the drawings:
Fig. 1 is a schematic structural view of a safety system for dealing with a severe accident of a nuclear power plant in an embodiment of the present disclosure;
Fig. 2 is a schematic structural view of an in-reactor water injection system in the safety system in Fig. 1; and
Fig. 3 is a schematic structural view of a reactor pit natural circulation system in the safety system in Fig. 1.

### Description Of The Embodiments

To clearly understand the technical features, objectives and effects of the disclosure, specific embodiments of the disclosure will now be described in detail with reference to the accompanying drawings.

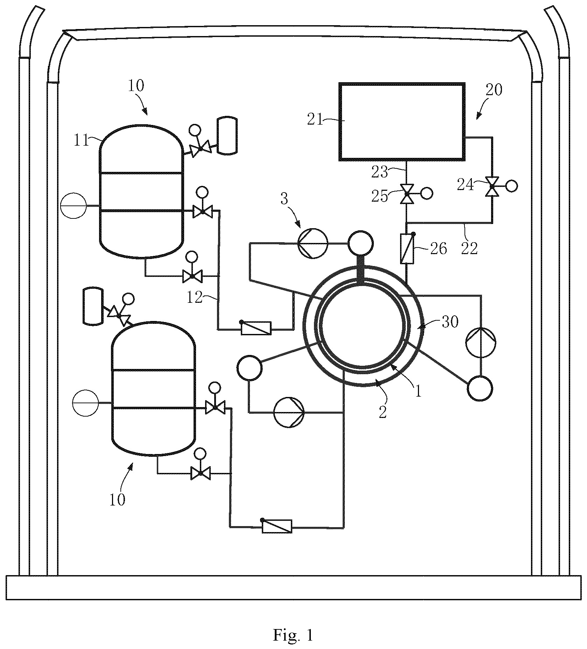

As shown in Fig. 1, a safety system for dealing with a severe accident of a nuclear power plant in an embodiment of the present disclosure is disposed in a containment, and the safety system includes at least one in-reactor water injection system 10 for injecting water into a reactor pressure vessel 1 and at least one outer-reactor cooling water injection system 20 for injecting water into a pit 2.

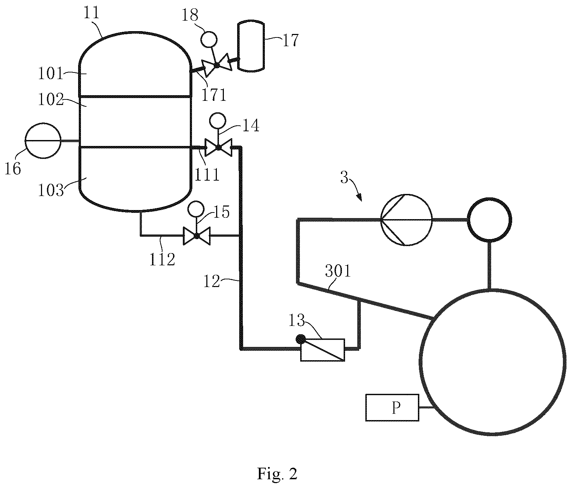

As shown Fig. 1 and Fig. 2, the in-reactor water injection system 10 includes a multi-stage accumulator 11 and a first water injection pipeline 12 connected to a cold pipe 301 of a primary loop system 3. An interior space of the multi-stage accumulator 11 includes a gas-phase space 101, a first-stage water injection space 102 and a second-stage water injection space 103 distributed in sequence from top to bottom. The gas-phase space 101 is configured as a nitrogen space with a pressure of 4.0MPa-5.0MPa. The first-stage water injection space 102 and the second-stage water injection space 103 are liquid-phase spaces for storage of cooling water (boron water such as boric acid water), and configured to inject water in a medium pressure stage and a low-pressure stage respectively. When the first-stage water injection space 102 starts water injection, the corresponding pressure of the primary loop system of the nuclear power plant is 4.0MPa-5.0Mpa. That is, when the pressure of the primary loop system of the nuclear power plant is 4.0MPa-5.0MPa, the first-stage water injection space 102 starts injecting water to submerge the reactor core. When the second-stage water injection space 103 starts water injection, the corresponding pressure of the primary loop system of the nuclear power plant is 0.4MPa-1.0MPa. That is, when the pressure of the primary loop system of the nuclear power plant is 0.4MPa-1.0MPa, the second-stage water injection space 103 starts injecting water to submerge the reactor core. The multi-stage accumulator 11 is provided with a first flow pipeline 111 and a second flow pipeline 112. The first flow pipeline 111 communicates the first-stage water injection space 102 with the first water injection pipeline 12, and the second flow pipeline 112 communicates the second-stage water injection space 103 with the first water injection pipeline 12. A pipe diameter of the first flow pipeline 111 is greater than that of the second flow pipeline 112, so that the first flow pipeline 111 is a large flow pipe, and the cooling water in the first-stage water injection space 102 may be quickly injected into a core of the reactor. The second flow pipeline 112 is a small flow pipe, so that the primary loop system 3 can inject water into the core under a low-pressure state.

Alternatively, the first flow pipeline 111 has a pipe diameter of ≥ 100mm, and a flow rate of ≥ 300m³/h; the second flow pipeline 112 has a pipe diameter of 40mm-80mm, and a water injection flow rate of 20m³/h-60m³/h. The first flow pipeline 111 may be the same as the first water injection pipeline 12.

The first flow pipeline 111 may correspond to a lower end of the first-stage water injection space 102, one end of first flow pipeline 111 is connected to the multi-stage accumulator 11 and communicated with the first-stage water injection space 102, and another end of first flow pipeline 111 is connected to the first water injection pipeline 12 and communicated therewith. The second flow pipeline 112 may correspond to the second-stage water injection space 103, one end of second flow pipeline 112 is connected to a lower end or a bottom portion of the multi-stage accumulator 11, and another end of second flow pipeline 112 is connected to the first water injection pipeline 12 and communicated therewith.

Furthermore, the in-reactor water injection system 10 further includes a first check valve 13 disposed on the first water injection pipeline 12, a first power valve 14 disposed on the first flow pipeline 111, and a second power valve 15 disposed on the second flow pipeline 112. The first check valve 13 disposed on the first water injection pipeline 12 is configured to prevent the cooling water from flowing back. The first power valve 14 is configured to control the open-close of the first flow pipeline 111, and the second power valve 15 is configured to control the open-close of the second flow pipeline 112.

Alternatively, the first power valve 14 and the second power valve 15 adopt electric valves and are connected to an instrument control system of the nuclear power plant, respectively. The opening and closing of the first power valve 14 or the second power valve 15 is controlled by the instrument control system through an automatic signal, to realize an automatic injection of cooling water into the reactor. When the nuclear power plant is powered off or the like, the first power valve 14 or the second power valve 15 can be opened manually to realize water injection.

The in-reactor water injection system 10 further includes a liquid level gauge 16 disposed on the multi-stage accumulator 11 corresponding to the first-stage water injection space 102, for monitoring a liquid level of the first-stage water injection space 102. When the liquid level of the first-stage water injection space 102 in the multi-stage accumulator 11 drops to a preset value, a liquid level alarm is triggered, a signal to close the first power valve 14 is triggered, the first power valve 14 is automatically closed, and the communication between the first-stage water injection space 102 and the first flow pipeline 111 is disconnected, so as to prevent the gas in the multi-stage accumulator 11 from leaking through the first flow pipeline 111, and thereby to avoid an insufficient back pressure when the second stage starts due to the gas leakage in the multi-stage accumulator 11. The position where the preset value of the liquid level is located is higher than the connection position of the first flow pipeline 111 on the multi-stage accumulator 11, ensuring that gas in the multi-stage accumulator 11 will not leak.

When the pressure of the primary loop system 3 of the reactor is less than a first preset value (e.g. 4.0MPa-5.0MPa), the first power valve 14 is opened by the instrument control system of the nuclear power plant through an automatic signal, water is quickly injected into the reactor pressure vessel (RPV) through the first flow pipeline 111 and the cold pipe 301, and thereby a core re-flooding is achieved under the accident condition. When the liquid level in the multi-stage accumulator 11 is below the preset value, a liquid level alarm is triggered, a signal to close the first power valve 14 is triggered, and the first power valve 14 is automatically closed. When the pressure of the primary loop system 3 continues to drop to less than a second preset value (0.4MPa-1MPa), a signal to open the second power valve 15 is triggered, the second power valve 15 is automatically opened, water is injected into the reactor pressure vessel through the second flow pipeline 112, and re-flooding by the primary loop system 3 is achieved under the low-pressure state.

According to needs, the interior space of the multi-stage accumulator 11 may further include at least one third-stage water injection space (not shown in the drawings) disposed below the second-stage water injection space 103, configured as a water injection space for subsequent stage. Correspondingly, the multi-stage accumulator 11 is provided with at least one third flow pipeline (not shown in the drawings), and the third flow pipeline is communicated with the third-stage water injection space and has a pipe diameter less than that of the first flow pipeline 111. The pipe diameter and flow rate of the third flow pipeline may be the same as that of the second flow pipeline 112. Similarly, a power valve is disposed on the third flow pipeline to control the open-close thereof. When the third-stage water injection space starts water injection, the corresponding pressure of the primary loop system of the nuclear power plant is less than that when the second-stage water injection space starts water injection.

Furthermore, the in-reactor water injection system 10 further includes a pressure gauge (not shown in the drawings) and a high-pressure gas source 17 (e.g. a high-pressure gas tank) connecting with the gas-phase space 101. A third power valve 18 is provided on a connection pipeline 171 which connects the high-pressure gas source 17 with the gas-phase space 101. The third power valve 18 may adopt an electric valve, the pressure gauge and the third power valve 18 are connected to the instrument control system of the nuclear power plant. The opening and closing of the third power valve 18 are controlled by the instrument control system through a pressure signal, so as to charge and boost the gas-phase space 101. When the gas **pressure** of the multi-stage accumulator 11 is less than 2.0MPa, a signal to open the third power valve 18 is triggered, the third power valve 18 is opened, and the high-pressure gas source 17 supplies gas into the multi-stage accumulator 11.

Two or more in-reactor water injection systems 10 may be provided, and each in-reactor water injection system 10 is connected to a corresponding cold pipe 301 respectively.

As shown in Fig. 1, the outer-reactor cooling water injection system 20 includes a high-level water injection tank 21 disposed above the reactor pressure vessel 1, and a second water injection pipeline 22 connected between the high-level water injection tank 21 and the pit 2. The high-level water injection tank 21 is configured to store cooling water (boron water), and the cooling water can be injected into the pit 2 by gravity force without a power pump.

The second water injection pipeline 22 is a pipe with a pipe diameter ≥ 100mm, and can quickly fill up the pit 2 with cooling water.

In the present disclosure, the outer-reactor cooling water injection system 20 further includes a third flow pipeline 23 connected between the high-level water injection tank 21 and the second water injection pipeline 22.

A pipe diameter of the third flow pipeline 23 is smaller than that of the second water injection pipeline 22, and a connection position of the third flow pipeline 23 on the high-level water injection tank 21 is lower than that of the second water injection pipeline 22 on the high-level water injection tank 21. For example, the second water injection pipeline 22 may be connected to a middle portion or a lower end of the high-level water injection tank 21, and the cooling water is injected into the pit 2 through the second water injection pipeline 22 until the liquid level of the high-level water injection tank 21 drops to below a water inlet end of the second water injection pipeline 22. The third flow pipeline 23 is connected to a bottom of the high-level water injection tank 21, subsequently the cooling water can be continuously supplied for pit 2 through the third flow pipeline 23 with a relatively small flow rate. The flow rate of the third flow pipeline 23 may be 30m³/h-70m³/h.

The outer-reactor cooling water injection system 20 further includes a fourth power valve 24 and a second check valve 26 which are disposed sequentially on the second water injection pipeline 22 in a direction from the high-level water injection tank 21 to the pit 2, and a fifth power valve 25 disposed on the third flow pipeline 23. The connection position of the third flow pipeline 23 on the second water injection pipeline 22 is located between the fourth power valve 24 and the second check valve 26. The second check valve 26 disposed on the second water injection pipeline 22 is configured to prevent the cooling water from flowing back. The fourth power valve 24 is configured to control the open-close of one end of the second water injection pipeline 22 connecting to the high-level water injection tank 21, and the fifth power valve 25 is configured to control the open-close of the third flow pipeline 23.

As an option, the fourth power valve 24 and the fifth power valve 25 adopt electric valves and are connected to the instrument control system of the nuclear power plant, and the open and close of the fourth power valve 24 or the fifth power valve 25 is controlled by the instrument control system through an automatic signal to realize an automatic injection of cooling water into the pit 2. When the nuclear power plant is power off or the like, the fourth power valve 24 and the fifth power valve 25 can be opened manually to realize water injection.

Furthermore, the safety system for dealing with a severe accident of a nuclear power plant of the present disclosure further includes a reactor pit natural circulation system 30 disposed between the reactor pressure vessel 1 and the pit 2. The reactor pressure vessel 1 is suspended in the pit 2, and an outer periphery of the reactor pressure vessel 1 is provided with a thermal insulation guide layer 4. The pit 2 is formed by enclosing a shield wall.

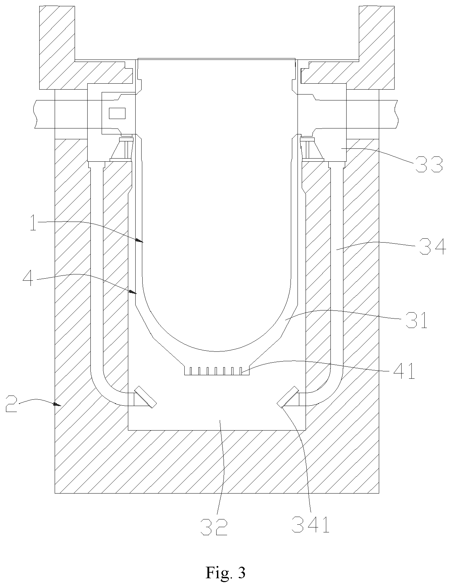

As shown in Fig. 1 and Fig. 3, the reactor pit natural circulation system 30 includes a cooling water flow channel 31 defined between the reactor pressure vessel 1 and the thermal insulation guide layer 4, a pit water injection space 32 defined between the thermal insulation guide layer 4 and an inner wall surface of the pit 2, an annular water tank 33 disposed on an outer periphery of an upper end of the reactor pressure vessel 1, and a water return flow channel 34 disposed in the pit wall (shield wall) and communicating the annular water tank 33 with the pit water injection space 32.

Wherein, a bottom of the thermal insulation guide layer 4 is provided with a water inlet 41 communicating the cooling water flow channel 31 with the pit water injection space 32, so that cooling water in the pit water injection space 32 is able to enter the cooling water flow channel 31 through the water inlet 41. The water inlet 41 of the thermal insulation guide layer 4 remains closed when the reactor is under a normal operating condition; and the water inlet 41 is opened when the reactor is under a severe accident condition. An exhaust outlet (not shown in the drawings) is disposed on an upper end of the thermal insulation guide layer 4 and communicates the cooling water flow channel 31 with the annular water tank 33. The exhaust outlet is always above the liquid level of the annular water tank 33, and a distance between a center of the exhaust outlet and the liquid level may be 0.1-0.8m.

Specifically, the thermal insulation guide layer 4 includes a guide plate and a thermal insulation layer disposed sequentially outside the reactor pressure vessel 1.

The second water injection pipeline 22 of the outer-reactor cooling water injection system 20 is connected and communicated with the annular water tank 33 or the pit water injection space 32, to fill the cooling water into the pit 2, and to fill up the cooling water flow channel 31, the pit water injection space 32 and the annular water tank 33.

A buoyancy opening member 341 is disposed at a water outlet of the water return flow channel 34 communicated with the pit water injection space 32. The water outlet of the water return flow channel 34 remains closed when the reactor is under a normal operating condition so as to reduce the vent system bypass, and may be automatically opened by the buoyancy opening member 341 when the pit is filled up with water under a severe accident condition. The buoyancy opening member 341 may be a buoyancy ball or a buoyancy cover plate, and when the cooling water is injected into the pit water injection space 32, the buoyancy ball floats up to open the water outlet. The water inlet 41 of the thermal insulation guide layer 4 is further provided with a passive open-close member, such as a buoyancy cover plate or the like, floating up to open the water inlet 41 when there is water, and kept to close the water inlet 41 without water.

When the reactor is under a severe accident condition, the cooling water is heated outside the reactor pressure vessel 1 to generate a steam-water two-phase flow, the steam-water two-phase flow flows upward along the cooling water flow channel 31 and then is separated to steam and water when flowing through the exhaust outlet, and the liquid water falls into the annular water tank 33; the cooling water in the annular water tank 33 flows back into the pit water injection space 32 through the water return flow channel 34, thereby to form a natural circulation loop. A plurality of the water-return flow channels 34 are provided, and are spaced distributed in the pit wall (shield wall) of the pit 2 along a circumference direction of the reactor pressure vessel 1, thereby not occupying the pit space, meanwhile, the natural circulation of the pit will not be affected by deformation or leakage or installation clearance of the thermal insulation guide layer 4.

In the reactor pit natural circulation system 30, the natural circulation is formed by utilized a water density difference between the pit 2 and the water return flow channel 34, and the flow rate of the natural circulation may be up to 3000 m³/h above, thus the cooling ability of an outer wall surface of the reactor pressure vessel 1 is improved; meanwhile, the steam-water two-phase flow discharged from the exhaust outlet is automatically separated to steam and water above the annular water tank 33, and the steam is discharged into a large space inside the containment through a space between a main channel of an upper end of the reactor pressure vessel 1 and shield wall of the pit.

A control method for dealing with a severe accident of a nuclear power plant of the present disclosure adopts the above safety system for dealing with a severe accident of a nuclear power plant. As shown in Figs. 1 to 3, the control method for dealing with a severe accident of the nuclear power plant may include the following steps.

Before the reactor is under a severe accident condition, when a pressure of the primary loop system 3 of the reactor is less than a first preset value (e.g. 4.0MPa-5.0MPa), the in-reactor water injection system 10 quickly injects water into the reactor pressure vessel 1 through the first flow pipeline 111, the first water injection pipeline 12 and the cold pipe 301, to flood the core; when the pressure of the primary loop system 3 is less than a second preset value (e. g. 0.4MPa-1.0MPa), the in-reactor water injection system 10 injects water into the reactor pressure vessel 1 through the second flow pipeline 112, the first water injection pipeline 12 and the cold pipe 301, to re-flood the core. Wherein, the first preset value is larger than the second preset value.

When the reactor is under a severe accident condition, the outer-reactor cooling water injection system 20 injects water into the pit 2 through the second water injection pipeline 22.

Wherein, under a severe accident condition, when the outer-reactor cooling water injection system 20 injects water into the pit 2 to a target liquid level, sustainable suppling the water to the pit 2 through the third flow pipeline 23; and the flow rate for suppling the water is of 30m³/h-70m³/h.

Specifically, when the reactor is under a severe accident condition, the cooling water in the pit water injection space 32 injected into the pit 2 enters the cooling water flow channel 31 through the water inlet of the thermal insulation guide layer 4, and is heated outside the reactor pressure vessel 1 to generate a steam-water two-phase flow, the steam-water two-phase flow flows upward along the cooling water flow channel 31 and then is separated to steam and water when flowing through the exhaust outlet, and the liquid water falls into the annular water tank 33; the cooling water in the annular water tank 33 flows back into the pit water injection space 32 through the water return flow channel 34, so as to circulate.

In the present disclosure, the in-reactor and outer-reactor cooling are carried out through the in-reactor water injection system in conjunction with the outer-reactor cooling water injection system. The reactor is cooled by the in-reactor water injection system before the reactor is under a severe accident condition. Meanwhile, the start time of the outer-reactor cooling water injection system can be prolonged meanwhile.

For example, if the volume of the multi-stage accumulator 11 is increased by 60m³, the start time of the water injection of the outer-reactor cooling water injection system can be prolonged to more than 3.5 hours later when the accident occurs, the corresponding outer-reactor water injection flow rate may be between 180m³/h-360m³/h, and the start time and the outer-reactor water injection flow rate are mutual coupling. For the pit with a free volume of 180m³, the larger the outer-reactor water injection flow rate is, the shorter the filled-up time is, the current filled-up water injection time is 30min, with a flow rate of 360m³/h correspondingly, and the start time can be prolonged to 4 hours later when the accident occurs; if the outer-reactor water injection flow rate is 180m³/h, the filled-up water injection time is 1 hour, the start time is 3.5 hours later. Obviously, the above start time is greatly prolonged compared with 20min-30min without an in-reactor water injection condition, and very sufficient time for judgment and operation of the site accident dealing with personnel is thus provided.

The above are only embodiments of the present disclosure, and thus do not limit the scope of the present disclosure. The scope of the present invention is defined by the appended claims.

## Claims

1. A safety system for dealing with a severe accident of a nuclear power plant, wherein the safety system comprises at least one in-reactor water injection system (10) for injecting water into a reactor pressure vessel (1); and
each in-reactor water injection system (10) comprises a multi-stage accumulator (11), and a first water injection pipeline (12) connected to a cold pipe (301) of a primary loop system (3); an interior space of the multi-stage accumulator (11) comprises a gas-phase space (101), a first-stage water injection space (102), and a second-stage water injection space (103) distributed from top to bottom in sequence; the multi-stage accumulator (11) is provided with a first flow pipeline (111) and a second flow pipeline (112) having a pipe diameter less than that of the first flow pipeline (111), the first flow pipeline (111) communicates the first-stage water injection space (102) with the first water injection pipeline (12), and the second flow pipeline (112) communicates the second-stage water injection space (103) with the first water injection pipeline (12),
wherein the safety system further comprises at least one outer-reactor cooling water injection system (20) for injecting water into a pit (2); and
each outer-reactor cooling water injection system (20) comprises a high-level water injection tank (21) disposed above the reactor pressure vessel (1), and a second water injection pipeline (22) connected between the high-level water injection tank (21) and the pit (2).

2. The safety system for dealing with the severe accident of the nuclear power plant according to claim 1, wherein the first flow pipeline (111) has a pipe diameter of ≥ 100mm; the second flow pipeline (112) has a pipe diameter of 40mm-80mm, and is configured to supply water at a water injection flow rate of 20m³/h-60m³/h.

3. The safety system for dealing with the severe accident of the nuclear power plant according to claim 1, wherein the gas-phase space (101) is configured to have a pressure of 4.0MPa-5.0MPa;
a corresponding pressure of the primary loop system (3) of the nuclear power plant when the first-stage water injection space (102) starts water injection is 4.0MPa-5.0MPa; and
the corresponding pressure of the primary loop system (3) of the nuclear power plant when the second-stage water injection space (103) starts water injection is 0.4MPa-1.0MPa.

4. The safety system for dealing with the severe accident of the nuclear power plant according to claim 1, wherein each in-reactor water injection system (10) further comprises a first check valve (13) disposed on the first water injection pipeline (12), a first power valve (14) disposed on the first flow pipeline (111), and a second power valve (15) disposed on the second flow pipeline (112).

5. The safety system for dealing with the severe accident of the nuclear power plant according to claim 4, wherein each in-reactor water injection system (10) further comprises a liquid level gauge (16) disposed on the multi-stage accumulator (11) corresponding to the first-stage water injection space (102); and
when a liquid level in the multi-stage accumulator (11) drops to a preset value, the safety system is configured to trigger a signal to close the first power valve (14), to close the first power valve (14), and to disconnect the communication between the first flow pipeline (111) and the first-stage water injection space (102); a position where the preset value is located is higher than a connection position of the first flow pipeline (111) on the multi-stage accumulator (11).

6. The safety system for dealing with the severe accident of the nuclear power plant according to claim 1, wherein each in-reactor water injection system (10) further comprises a pressure gauge and a high-pressure gas source (17) connecting with the gas-phase space (101); a third power valve (18) is provided on a connection pipeline (171) connected between the high-pressure gas source (17) and the gas-phase space (101); when a gas pressure of the multi-stage accumulator (11) is less than 2.0MPa, the safety system is configured to trigger a signal to open the third power valve (18), to open the third power valve (18), and the high-pressure gas source (17) is configured to supply gas into the multi-stage accumulator (11).

7. The safety system for dealing with the severe accident of the nuclear power plant according to claim 1, wherein the interior space of the multi-stage accumulator (11) further comprises at least one third-stage water injection space disposed below the second-stage water injection space (103); the multi-stage accumulator (11) is further provided with at least one third flow pipeline, and each third flow pipeline is communicated with each third-stage water injection space and has a pipe diameter less than that of the first flow pipeline (111).

8. The safety system for dealing with the severe accident of the nuclear power plant according to claim 1, wherein each outer-reactor cooling water injection system (20) further comprises a third flow pipeline (23) connected between the high-level water injection tank (21) and the second water injection pipeline (22); a pipe diameter of the third flow pipeline (23) is less than that of the second water injection pipeline (22), and a connection position of the third flow pipeline (23) on the high-level water injection tank (21) is lower than that of the second water injection pipeline (22) on the high-level water injection tank (21).

9. The safety system for dealing with the severe accident of the nuclear power plant according to claim 8, wherein each outer-reactor cooling water injection system (20) further comprises a fourth power valve (24) and a second check valve (26) disposed sequentially on the second water injection pipeline (22) in a direction from the high-level water injection tank (21) to the pit (2), and a fifth power valve (25) disposed on the third flow pipeline (23); and
a connection position of the third flow pipeline (23) on the second water injection pipeline (22) is located between the fourth power valve (24) and the second check valve (26).

10. A control method for dealing with a severe accident of a nuclear power plant, wherein the control method adopts the safety system for dealing with the severe accident of the nuclear power plant in any one of claims 1 to 10; the control method for dealing with the severe accident of the nuclear power plant comprises:
before the reactor being under a severe accident condition, when a pressure of the primary loop system (3) of the reactor being less than a first preset value, the at least one in-reactor water injection system (10) quickly injecting water into the reactor pressure vessel (1) through the first flow pipeline (111), the first water injection pipeline (12) and the cold pipe (301), to flood the core; when the pressure of the primary loop system (3) being less than a second preset value, the at least one in-reactor water injection system (10) injecting water into the reactor pressure vessel (1) through the second flow pipeline (112), the first water injection pipeline (12) and the cold pipe (301), to re-flood the core; the first preset value being larger than the second preset value,
wherein the control method further comprises: when the reactor being under a severe accident condition, at least one outer-reactor cooling water injection system (20) injecting water into a pit (2) through a second water injection pipeline (22).

## Patentansprüche

1. Sicherheitssystem zum Umgang mit einem schweren Störfall eines Kernkraftwerks, wobei das Sicherheitssystem mindestens ein reaktorinternes Wassereinspritzsystem (10) zum Einspritzen von Wasser in einen Reaktordruckbehälter (1) umfasst; und
jedes reaktorinterne Wassereinspritzsystem (10) einen mehrstufigen Akkumulator (11) und eine erste Wassereinspritzleitung (12), die an ein Kaltrohr (301) eines primären Kreislaufsystems (3) angeschlossen ist, umfasst; ein Innenraum des mehrstufigen Akkumulators (11) einen Gasphasenraum (101), einen erststufigen Wassereinspritzraum (102) und einen zweitstufigen Wassereinspritzraum (103), die von oben nach unten nacheinander verteilt sind, umfasst; der mehrstufige Akkumulator (11) mit einer ersten Strömungsleitung (111) und einer zweiten Strömungsleitung (112), die einen Rohrdurchmesser, der kleiner als der der ersten Strömungsleitung (111) ist, bereitgestellt ist, wobei die erste Strömungsleitung (111) den erststufigen Wassereinspritzraum (102) mit der ersten Wassereinspritzleitung (12) verbindet und die zweite Strömungsleitung (112) den zweitstufigen Wassereinspritzraum (103) mit der ersten Wassereinspritzleitung (12) verbindet,
wobei das Sicherheitssystem ferner mindestens ein Außenreaktor-Kühlwassereinspritzsystem (20) zum Einspritzen von Wasser in eine Grube (2) umfasst; und
jedes Außenreaktor-Kühlwassereinspritzsystem (20) einen oberhalb des Reaktordruckbehälters (1) angeordneten Hochwassereinspritztank (21) und eine zwischen dem Hochwassereinspritztank (21) und der Grube (2) angeschlossene zweite Wassereinspritzleitung (22) umfasst.

2. Sicherheitssystem zum Umgang mit dem schweren Störfall des Kernkraftwerkes nach Anspruch 1, wobei die erste Strömungsleitung (111) einen Rohrdurchmesser von ≥ 100 mm aufweist; die zweite Strömungsleitung (112) einen Rohrdurchmesser von 40 mm-80 mm aufweist und dazu konfiguriert ist, Wasser mit einer Wassereinspritzströmungsrate von 20 m³/h-60 m³/h zuzuführen.

3. Sicherheitssystem zum Umgang mit dem schweren Störfall des Kernkraftwerks nach Anspruch 1, wobei der Gasphasenraum (101) dazu konfiguriert ist, einen Druck von 4,0 MPa-5,0 MPa aufzuweisen;
ein entsprechender Druck des primären Kreislaufsystems (3) des Kernkraftwerks bei Beginn des Wassereinspritzens durch den erststufigen Wassereinspritzraum (102) 4,0 MPa-5,0 MPa beträgt; und
der entsprechende Druck des primären Kreislaufsystems (3) des Kernkraftwerks bei Beginn des Wassereinspritzens durch den zweitstufigen Wassereinspritzraum (103) 0,4 MPa-1,0 MPa beträgt.

4. Sicherheitssystem zum Umgang mit dem schweren Störfall des Kernkraftwerks nach Anspruch 1, wobei jedes reaktorinterne Wassereinspritzsystem (10) ferner ein erstes Rückschlagventil (13), das an der ersten Wassereinspritzleitung (12) angeordnet ist, ein erstes Leistungsventil (14), das an der ersten Strömungsleitung (111) angeordnet ist, und ein zweites Leistungsventil (15), das an der zweiten Strömungsleitung (112) angeordnet ist, umfasst.

5. Sicherheitssystem zum Umgang mit dem schweren Störfall des Kernkraftwerks nach Anspruch 4, wobei jedes reaktorinterne Wassereinspritzsystem (10) ferner einen Flüssigkeitsstandsmesser (16) umfasst, der an dem mehrstufigen Akkumulator (11) angeordnet ist, der dem erststufigen Wassereinspritzraum (102) entspricht; und
wenn ein Flüssigkeitsstand in dem mehrstufigen Akkumulator (11) auf einen voreingestellten Wert abfällt, das Sicherheitssystem dazu konfiguriert ist, ein Signal zum Schließen des ersten Leistungsventils (14) auszulösen, um das erste Leistungsventil (14) zu schließen, und den Anschluss zwischen der ersten Strömungsleitung (111) und dem ersten Wassereinspritzraum (102) zu trennen; eine Position, in der sich der voreingestellte Wert befindet, höher ist als eine Anschlussposition der ersten Strömungsleitung (111) an dem mehrstufigen Akkumulator (11).

6. Sicherheitssystem zum Umgang mit dem schweren Störfall des Kernkraftwerks nach Anspruch 1, wobei jedes reaktorinterne Wassereinspritzsystem (10) ferner einen Druckmesser und eine an dem Gasphasenraum (101) angeschlossene Hochdruckgasquelle (17) umfasst; ein drittes Leistungsventil (18) an einer zwischen der Hochdruckgasquelle (17) und dem Gasphasenraum (101) angeschlossenen Anschlussleitung (171) bereitgestellt ist; wenn ein Gasdruck des mehrstufigen Akkumulators (11) niedriger als 2,0 MPa ist, das Sicherheitssystem dazu konfiguriert ist, ein Signal zum Öffnen des dritten Leistungsventils (18) auszulösen, um das dritte Leistungsventil (18) zu öffnen, und die Hochdruckgasquelle (17) dazu konfiguriert ist, Gas in den mehrstufigen Akkumulator (11) zuzuführen.

7. Sicherheitssystem zum Umgang mit dem schweren Störfall des Kernkraftwerks nach Anspruch 1, wobei der Innenraum des mehrstufigen Akkumulators (11) ferner mindestens einen drittstufigen Wassereinspritzraum umfasst, der unterhalb des zweitstufigen Wassereinspritzraums (103) angeordnet ist; der mehrstufige Akkumulator (11) ferner mit mindestens einer dritten Strömungsleitung bereitgestellt ist und jede dritte Strömungsleitung mit jedem drittstufigen Wassereinspritzraum verbunden ist und einen Rohrdurchmesser aufweist, der kleiner als der der ersten Strömungsleitung (111) ist.

8. Sicherheitssystem zum Umgang mit dem schweren Störfall des Kernkraftwerks nach Anspruch 1, wobei jedes Außenreaktor-Kühlwassereinspritzsystem (20) ferner eine dritte Strömungsleitung (23) umfasst, die zwischen dem Hochwassereinspritztank (21) und der zweiten Wassereinspritzleitung (22) angeschlossen ist; ein Rohrdurchmesser der dritten Strömungsleitung (23) kleiner als der der zweiten Wassereinspritzleitung (22) ist und eine Anschlussposition der dritten Strömungsleitung (23) auf dem Hochwassereinspritztank (21) niedriger als die der zweiten Wassereinspritzleitung (22) auf dem Hochwassereinspritztank (21) ist.

9. Sicherheitssystem zum Umgang mit dem schweren Störfall des Kernkraftwerks nach Anspruch 8, wobei jedes Außenreaktor-Kühlwassereinspritzsystem (20) ferner ein viertes Leistungsventil (24) und ein zweites Rückschlagventil (26) umfasst, die nacheinander an der zweiten Wassereinspritzleitung (22) in einer Richtung von dem Hochwassereinspritztank (21) zu der Grube (2) angeordnet sind, und ein fünftes Leistungsventil (25) an der dritten Strömungsleitung (23) angeordnet ist; und
sich zwischen dem vierten Leistungsventil (24) und dem zweiten Rückschlagventil (26) eine Anschlussposition der dritten Strömungsleitung (23) an der zweiten Wassereinspritzleitung (22) befindet.

10. Steuerungsverfahren zum Umgang mit einem schweren Störfall eines Kernkraftwerks, wobei das Steuerungsverfahren das Sicherheitssystem zum Umgang mit dem schweren Störfall des Kernkraftwerks in einem der Ansprüche 1 bis 10 übernimmt; wobei das Steuerungsverfahren zum Umgang mit dem schweren Störfall des Kernkraftwerks Folgendes umfasst:
vor dem Auftreten eines Zustands eines schweren Störfalls des Reaktors, wenn ein Druck des primären Kreislaufsystems (3) des Reaktors niedriger als ein erster voreingestellter Wert ist, spritzt das mindestens eine reaktorinterne Wassereinspritzsystem (10) schnell Wasser in den Reaktordruckbehälter (1) durch die erste Strömungsleitung (111), die erste Wassereinspritzleitung (12) und das Kaltrohr (301) ein, um den Kern zu fluten; wenn der Druck des primären Kreislaufsystems (3) niedriger als ein zweiter voreingestellter Wert ist, spritzt das mindestens eine reaktorinterne Wassereinspritzsystem (10) Wasser in den Reaktordruckbehälter (1) durch die zweite Strömungsleitung (112), die erste Wassereinspritzleitung (12) und das Kaltrohr (301) ein, um den Kern erneut zu fluten; wobei der erste voreingestellte Wert größer als der zweite voreingestellte Wert ist,
wobei das Steuerungsverfahren ferner Folgendes umfasst: wenn sich der Reaktor in einem Zustand eines schweren Störfalls befindet, spritzt mindestens ein Außenreaktor-Kühlwassereinspritzsystem (20) Wasser durch eine zweite Wassereinspritzleitung (22) in eine Grube (2) ein.

## Revendications

1. Système de sécurité pour faire face à un accident grave d'une centrale nucléaire, dans lequel le système de sécurité comprend au moins un système d'injection d'eau dans le réacteur (10) pour injecter de l'eau dans une cuve sous pression du réacteur (1) ; et
chaque système d'injection d'eau dans le réacteur (10) comprend un accumulateur à étages multiples (11) et une première conduite d'injection d'eau (12) reliée à un tuyau froid (301) d'un système de boucle primaire (3) ; un espace intérieur de l'accumulateur à étages multiples (11) comprend un espace de phase gazeuse (101), un espace d'injection d'eau de premier étage (102) et un espace d'injection d'eau de deuxième étage (103) répartis de haut en bas en séquence ; l'accumulateur à étages multiples (11) est pourvu d'une première conduite d'écoulement (111) et d'une deuxième conduite d'écoulement (112) ayant un diamètre de tuyau inférieur à celui de la première conduite d'écoulement (111), la première conduite d'écoulement (111) fait communiquer l'espace d'injection d'eau de premier étage (102) avec la première conduite d'injection d'eau (12), et la deuxième conduite d'écoulement (112) fait communiquer l'espace d'injection d'eau de deuxième étage (103) avec la première conduite d'injection d'eau (12),
dans lequel le système de sécurité comprend également au moins un système d'injection d'eau de refroidissement externe du réacteur (20) pour injecter de l'eau dans une fosse (2) ; et
chaque système d'injection d'eau de refroidissement externe du réacteur (20) comprend un réservoir d'injection d'eau de haut niveau (21) disposé au-dessus de la cuve sous pression du réacteur (1) et une seconde conduite d'injection d'eau (22) reliée entre le réservoir d'injection d'eau de haut niveau (21) et la fosse (2).

2. Système de sécurité pour faire face à un accident grave de la centrale nucléaire selon la revendication 1, dans lequel la première conduite d'écoulement (111) a un diamètre de tuyau ≥ 100 mm ; la deuxième conduite d'écoulement (112) a un diamètre de tuyau de 40 mm à 80 mm, et est configurée pour fournir de l'eau à un débit d'injection d'eau de 20 m³/h à 60 m³/h.

3. Système de sécurité pour faire face à un accident grave de la centrale nucléaire selon la revendication 1, dans lequel l'espace de phase gazeuse (101) est configuré pour avoir une pression de 4,0 MPa à 5,0 MPa ;
une pression correspondante du système de boucle primaire (3) de la centrale nucléaire lorsque l'espace d'injection d'eau de premier étage (102) commence l'injection d'eau est de 4,0 MPa à 5,0 MPa ; et
la pression correspondante du système de boucle primaire (3) de la centrale nucléaire lorsque l'espace d'injection d'eau de deuxième étage (103) commence l'injection d'eau est de 0,4 MPa à 1,0 MPa.

4. Système de sécurité pour faire face à un accident grave de la centrale nucléaire selon la revendication 1, dans lequel chaque système d'injection d'eau dans le réacteur (10) comprend également un premier clapet anti-retour (13) disposé sur la première conduite d'injection d'eau (12), une première soupape de puissance (14) disposée sur la première conduite d'écoulement (111) et une seconde soupape de puissance (15) disposée sur la deuxième conduite d'écoulement (112).

5. Système de sécurité pour faire face à un accident grave de la centrale nucléaire selon la revendication 4, dans lequel chaque système d'injection d'eau dans le réacteur (10) comprend également une jauge de niveau de liquide (16) disposée sur l'accumulateur à étages multiples (11) correspondant à l'espace d'injection d'eau de premier étage (102) ; et
lorsqu'un niveau de liquide dans l'accumulateur à étages multiples (11) chute à une valeur prédéfinie, le système de sécurité est configuré pour déclencher un signal pour fermer la première soupape de puissance (14), pour fermer la première soupape de puissance (14) et pour interrompre la communication entre la première conduite d'écoulement (111) et l'espace d'injection d'eau de premier étage (102) ; une position où se situe la valeur prédéfinie est plus haute qu'une position de liaison de la première conduite d'écoulement (111) sur l'accumulateur à étages multiples (11).

6. Système de sécurité pour faire face à un accident grave de la centrale nucléaire selon la revendication 1, dans lequel chaque système d'injection d'eau dans le réacteur (10) comprend également un manomètre et une source de gaz haute pression (17) reliée à l'espace de phase gazeuse (101) ; une troisième soupape de puissance (18) est prévue sur une conduite de liaison (171) reliée entre la source de gaz haute pression (17) et l'espace de phase gazeuse (101) ; lorsqu'une pression de gaz de l'accumulateur à étages multiples (11) est inférieure à 2,0 MPa, le système de sécurité est configuré pour déclencher un signal pour ouvrir la troisième soupape de puissance (18), pour ouvrir la troisième soupape de puissance (18), et la source de gaz haute pression (17) est configurée pour fournir du gaz à l'accumulateur à étages multiples (11).

7. Système de sécurité pour faire face à un accident grave de la centrale nucléaire selon la revendication 1, dans lequel l'espace intérieur de l'accumulateur à étages multiples (11) comprend également au moins un espace d'injection d'eau de troisième étage disposé en dessous de l'espace d'injection d'eau de deuxième étage (103) ; l'accumulateur à étages multiples (11) est également pourvu d'au moins une troisième conduite d'écoulement, et chaque troisième conduite d'écoulement communique avec chaque espace d'injection d'eau de troisième étage et a un diamètre de tuyau inférieur à celui de la première conduite d'écoulement (111).

8. Système de sécurité pour faire face à un accident grave de la centrale nucléaire selon la revendication 1, dans lequel chaque système d'injection d'eau de refroidissement externe du réacteur (20) comprend également une troisième conduite d'écoulement (23) reliée entre le réservoir d'injection d'eau de haut niveau (21) et la seconde conduite d'injection d'eau (22) ; un diamètre de tuyau de la troisième conduite d'écoulement (23) est inférieur à celui de la seconde conduite d'injection d'eau (22), et une position de liaison de la troisième conduite d'écoulement (23) sur le réservoir d'injection d'eau de haut niveau (21) est inférieure à celle de la seconde conduite d'injection d'eau (22) sur le réservoir d'injection d'eau de haut niveau (21).

9. Système de sécurité pour faire face à un accident grave de la centrale nucléaire selon la revendication 8, dans lequel chaque système d'injection d'eau de refroidissement externe du réacteur (20) comprend également une quatrième soupape de puissance (24) et un second clapet anti-retour (26) disposés séquentiellement sur la seconde conduite d'injection d'eau (22) dans une direction allant du réservoir d'injection d'eau de haut niveau (21) à la fosse (2) et une cinquième soupape de puissance (25) disposée sur la troisième conduite d'écoulement (23) ; et
une position de liaison de la troisième conduite d'écoulement (23) sur la seconde conduite d'injection d'eau (22) est située entre la quatrième soupape de puissance (24) et le second clapet anti-retour (26).

10. Procédé de commande pour faire face à un accident grave d'une centrale nucléaire, dans lequel le procédé de commande adopte le système de sécurité pour faire face à l'accident grave de la centrale nucléaire selon l'une quelconque des revendications 1 à 10 ; le procédé de commande pour faire face à l'accident grave de la centrale nucléaire comprend :
avant que le réacteur ne soit dans une condition d'accident grave, lorsque la pression du système de boucle primaire (3) du réacteur est inférieure à une première valeur prédéfinie, l'au moins un système d'injection d'eau dans le réacteur (10) injecte rapidement de l'eau dans la cuve sous pression du réacteur (1) à travers la première conduite d'écoulement (111), la première conduite d'injection d'eau (12) et le tuyau froid (301), pour inonder le cœur ; lorsque la pression du système de boucle primaire (3) est inférieure à une seconde valeur prédéfinie, l'au moins un système d'injection d'eau dans le réacteur (10) injecte de l'eau dans la cuve sous pression du réacteur (1) à travers la deuxième conduite d'écoulement (112), la première conduite d'injection d'eau (12) et le tuyau froid (301), pour inonder à nouveau le cœur ; la première valeur prédéfinie étant supérieure à la seconde valeur prédéfinie,
dans lequel le procédé de commande comprend également : lorsque le réacteur est dans une condition d'accident grave, au moins un système d'injection d'eau de refroidissement externe du réacteur (20) injectant de l'eau dans une fosse (2) à travers une seconde conduite d'injection d'eau (22).
